# EUROPEAN PATENT SPECIFICATION

(11) **EP 0 898 867 B1**
(45) Date of publication and mention of the grant of the patent: **13.08.2003**
(21) Application number: 98105376.2
(22) Date of filing: 25.03.1998
(51) Int. Cl.: A01C 11/02

(54) **Machine for transplanting seedlings**
Maschine zum Verpflanzen von Sämlingen
Machine pour transplanter des jeunes plants

(30) Priority: 26.08.1997 JP 24467297; 26.08.1997 JP 24467597; 26.08.1997 JP 24467697; 25.12.1997 JP 36699897
(43) Date of publication of application: 03.03.1999
(73) Proprietor: NIHON TENSAISEITO KABUSHIKI KAISHA, Chuo-ku Tokyo (JP)
(72) Inventor: Nanbu, Tetsuo, Nihon Tensaiseito K.K., Obihiro-shi, Hokkaido (JP); Terasawa, Hidekazu, Nihon Tensaiseito K.K., Obihiro-shi, Hokkaido (JP); Kawamoto, Yasunobu, Nihon Tensaiseito K.K., Obihiro-shi, Hokkaido (JP)
(74) Representative: Patentanwälte Wenzel & Kalkoff

(56) References cited:
- EP-A- 0 569 803
- US-A- 4 167 911
- US-A- 4 788 920
- PATENT ABSTRACTS OF JAPAN vol. 014, no. 306 (C-0735), 3 July 1990 & JP 02 104208 A (KUBOTA LTD), 17 April 1990
- PATENT ABSTRACTS OF JAPAN vol. 013, no. 516 (C-656), 17 November 1989 & JP 01 211415 A (HOKUEI:KK), 24 August 1989
- PATENT ABSTRACTS OF JAPAN vol. 017, no. 333 (C-1074), 24 June 1993 & JP 05 038209 A (KUBOTA CORP), 19 February 1993
- PATENT ABSTRACTS OF JAPAN vol. 016, no. 304 (C-0959), 6 July 1992 & JP 04 084812 A (HOKUEI:KK), 18 March 1992
- PATENT ABSTRACTS OF JAPAN vol. 098, no. 006, 30 April 1998 & JP 10 028420 A (KUBOTA CORP), 3 February 1998

## Description

This invention relates to a machine of the type placed on the ground which holds seedlings grown in a series of pots, which are formed in such a manner as two strips of paper are bonded and therebetween pots are formed at a given pitch and these are bonded using a water soluble paste to link together, and transplants these to a field, according to the preamble of claim 1.

### Description of the prior art

Such a machine is known from EP-A-0 569 803.

As a series of pots, there are for example what are disclosed in Japanese Patent Publication Nos.Sho 58-11817 and Hei 4-79612. According to these, those pots are initially at the time of non-use pressed flat together and at the time of use developed to obtain a series of honeycomb like pots, which are accommodated in a box, filled with soils and sown, and thus many seedlings can be grown concentrically. And, according to this seedling growing method using a series of pots, since every seedling is grown in a pot independently, entangles of roots between seedlings can be avoided, and in addition, since the water soluble paste becomes deteriorated, a given days after growing seedlings by drawing of an end thereof it is drawn out in a row from the overlapped series of pots filled with soils, which enables to transplant seedlings continuously.

Now, in general, the seedlings grown using a series of pots are transplanted with the pots keeping the manner linked continuously, and conventionally, a transplanting machine therefor has been developed for its exclusive use and used actually. For example, the transplanting machines described in Japanese Patent Laid-open Nos. Hei 5-308822 and Hei 8-89028 comprise a body provided at its rear end opposite to an advancing direction thereof with an opener for making a groove for transplanting. The body comprises thereon a simple structures having potted seedlings placing section for putting the above series of pots, a potted seedlings guide section for guiding a series of pots drawn out in a row from the potted seedlings placing section and a seedlings feeding section for feeding seedlings from the potted seedlings guide section on the field, and merely due to moving of the body on the field, the seedlings in a form of pots wherein a seedling is accommodated are fed continuously in a groove formed by the opener to transplant the seedlings easily.

However, since multiple series of pots are formed with a series of pots being overlapped each other and accordingly the pitch of the pots is limited to the length of a connection portion (piece) of a pot, i.e. a side of a pot, when using a planting machine described in the above publications, a pitch between seedlings is limited the length of the piece, so that if the pitch is too small, the use of that machine has to be resigned.

Further, for instance, in the case of Japanese Patent Publication No. Sho 63-61886, a transplanting machine is described, in which a preceding seedling pot of a row of seedling pots is clamped by a pair of rotary transplantation bars and is separated from following seedling pot by cutting its connection piece to transplant the separated seedling pot in a groove. Thereby, the pitch between seedlings can be changed, however, the transplanting machine itself becomes complicated and large-scaled and can not used simply.

Further, for instance, in the case of Japanese Patent laid-open No. Hei 7-123869, in order to extend the connection piece when transplanting a plurality of cuts in the side of the pot or in the connection piece in advance are applied, or in Japanese Patent laid-open No. Hei 1- 205687, the connection piece is set longer than a side of the pot and folded in the length of the side of the pot through a water-soluble paste, thereby when transplanting the pitch is extended. However, in either case there has been following problems, for instance in the former case, when transplanting the connection piece is apt to be separted unintentionally due to the resetance against the taking out force and in the latter case, manufacture of a series of pots is complicated and the manufacturing cost becomes high.

In a filed treating seedlings which are grown in different place by clamping them between two tapes, as described by, e.g., JP 02 04208 A (KUBOTA LTD) published on April 17, 1990 (PATENT ABSTRACTS OF JAPAN, vol. 014, No. 30636 (C-0735), July 1990), after two tapes of tape seedlings are separated, the seedlings are peeled off from the tape by the revolving pawl mechanism of the planting mechanism and the seedlings are successively planted through the guide member. In the case of the potted seedlings, there exists root block with soils. Therefore, in a process according to such a planting mechanism, seedlings are easily collapsed and root block are broken, which makes difficult to stably conduct the transplantation.

### Summary of the invention

The present invention has been made in the light of the above problems and the purpose of which is to provide a transplanting machine in which a pitch of the seedlings grown using a series of seedling pots is free to be changed arbitrarily and simply when transplanting. This invention is to attain the above purpose, in a transplanting machine which, using a multiple series of pots which are formed in such a manner as two strips are bonded and therebetween pots are formed at a given pitch and these are bonded using a water soluble paste to link together, transplants the seedlings grown in that multiple series of pots, and that machine comprises a body provided at its rear end opposite to an advancing direction thereof with an opener for forming a groove for transplanting, and on the body, in order from the front side of advancing direction, there are a seedling pots placing section where the above mentioned multiple series of pots are placed, a series of seedling pots guide section for guiding a series of pots taken out in a row from the placing section and a two strips peeling off apparatus, which peels off two strips right and left to expose the potted seedling with soils and a carrying conveyor which carries the seedling with soils fed from the peeling off apparatus while being clamped and kept upright toward the rear side of the body, and in accordance with the movement of the body the peeling off apparatus and the carrying conveyor are operated to feed the seedlings into the groove formed by the opener continuously.

In the transplanting machine thus formed, since the two strips of papers are peeled off to expose seedling therein with soils, which is carried by the conveyor to transplant seedlings in the planting groove, by changing the velocity ratio between the peeling due to the strips peeling off apparatus and carrying due to the carrying conveyor, the pitch between seedlings to be planted can be arbitrarily changed. In addition, if the velocity of the conveyor is set approximately identical with the one of the moving velocity of the body, the seedlings with soil may stand still on the field, which causes to avoid the seedlings from receiving any inertia when transplanting on the field and falling.

In the present invention, rolling wheels may be provided on the body, which roll on the field according to the movement of the body and may be used as a power source for the strips peeling off apparatus and the carrying conveyor. Thus, when the rolling wheels are used as a power source, it can not only go without a special power source such as a motor for the strips peeling off apparatus and the carrying conveyor but also can make easily the strips peeling off apparatus and the carrying conveyor synchronized bwith the moving velocity of the body.

Further, in the present invention, the strips peeling off apparatus is preferably constituted in such a manner as it takes out the peeled strips toward the advancing direction of the body. Thus constructed, an extended portion of the potted seedlings guide section is not widely occupied by such structure of the strips peeling off apparatus and the carrying conveyor can be located near by the position where the seedlings are exposed by the strips peeling off apparatus, so that there is no need of preparing a special means to convey the seedlings to the carrying conveyor. In the present invention, the above carrying conveyor can be structured in such a manner as it can clamp the seedling fed from the peeling off device in its leaf portion. By clamping the seedling such like, the seedling with soil hangs down vertically in the portion lower than leaf portion by its weight, so that it is advantageous to prevent the seedling from falling when being fed to the groove.

Further, in the present invention, the above carrying conveyor can be structured in such a manner as it comprises a first conveyor for carrying the seedlings fed from the strips peeling off apparatus by clamping its root block portion of the seedlings with soils and a second conveyor for carrying it by clamping in its leaf portion of the seedlings with soils, wherein the initial portion of the second conveyor is overlapped on the end portion of the first conveyor.

In case the carrying conveyor is structured double as shown above, since at first the first conveyor clamps the root block portion of the seedlings fed from the strips peeling off apparatus, if the leaf portion of the seedling peeled off by the strips peeling off apparatus and the leaf portion of the following seedling taken out in the strips peeling off apparatus from the seedlings guide portion are overlapped each other, there is no anxiety to pull out the leaf portion of the following seedling, thereby an stable carrying of each of the seedlings with soils is carried out. In addition, since the initial portion of the second conveyor is overlapped on the end portion of the first conveyor, and before leaving of the seedling with soils from the first conveyor, the second conveyor clamps firmly the leaf portion of the seedlings with soils, so that the seedling with soils does not fall down during carrying.

Further, the above conveyor is structured preferably in such a manner as it is inclined rearward, thereby, it can feed the seedlings with soil nearby the field to prevent it firm from falling.

In this invention, it does not matter which kind of structure it is, anyhow it is preferable to structure it as a pair of conveyors, thereby the seedlings with soil are clamped simply.

### Brief description of the drawings

Fig. 1 is a plan view of the main portion of a machine for transplanting as a first embodiment of the present invention.
Fig. 2 is a side view of the main portion of a machine for transplanting as a first embodiment of the present invention.
Fig. 3 is a side view showing the total structure of the machine for transplanting as a first embodiment of the present invention.
Fig. 4 is a plan view showing the total structure of the machine for transplanting as a first embodiment of the present invention.
Fig. 5 is a plan view for showing multiple series of potted seedlings with soils.
Fig. 6 is a perspective view showing an assembly structure of a ground sliding plate with an opener using in the present invention.
Fig. 7 is a sectional view showing a winding reel in the strips peeling off apparatus used in the first embodiment of the present invention.
Fig. 8 is a schematic view showing a driving mechanism structure used in the first embodiment of the present invention.
Fig. 9 is for explaining matters to pay attention in manufacturing the first embodiment as a machine for transplanting of the present invention.
Fig. 10 is for showing processes of transplanting using a machine for transplanting of the first embodiment of the present invention.
Fig. 11 is for showing an example of a variation in the strips peeling apparatus of the first embodiment of the present invention.
Fig. 12 is for showing the characterized portion of a second embodiment of the present invention.
Fig. 13 is a sectional view of a taking out unit forming the strips peeling off apparatus shown in Fig 12.
Fig. 14 is a side view of characterized portion of a third embodiment of the present invention.
Fig. 15 is an enlarged view of one part of Fig. 14.
Fig. 16 is for explaining matters to pay attention in using the third embodiment as a machine for transplanting of the present invention.
Fig. 17 is a plan view of an example of a variation of the carrying conveyor using in the present invention.
Fig. 18 is a perspective view of an example of a variation of the body using in the present invention.

### Detailed explanation of the invention

Hereinafter, embodiments of the present invention are explained based on the attached drawings.

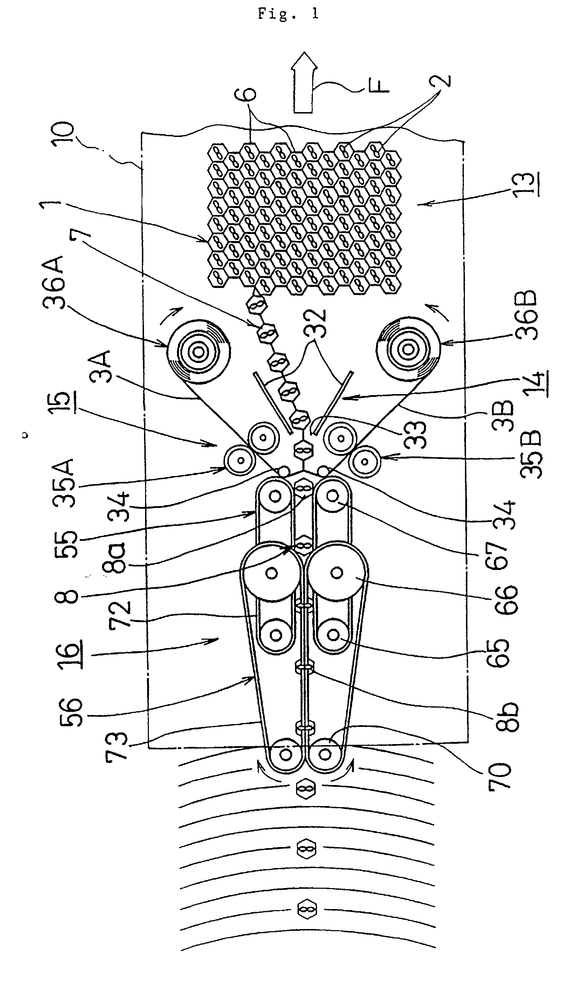

Figs. 1-4 show a total structure of a machine for transplanting of the present invention as a first embodiment. This machine for transplanting is for transplanting a seedling 2 grown in multiple series of pots 1 continuously, it comprises a body 10 having a ground sliding plate 11 provided at a rear side of advancing direction F and an opener 12, and on the body 10, at the front side of the advancing direction F a potted seedlings placing section 13 where above mentioned multiple series of potted seedlings 1 are placed is provided.

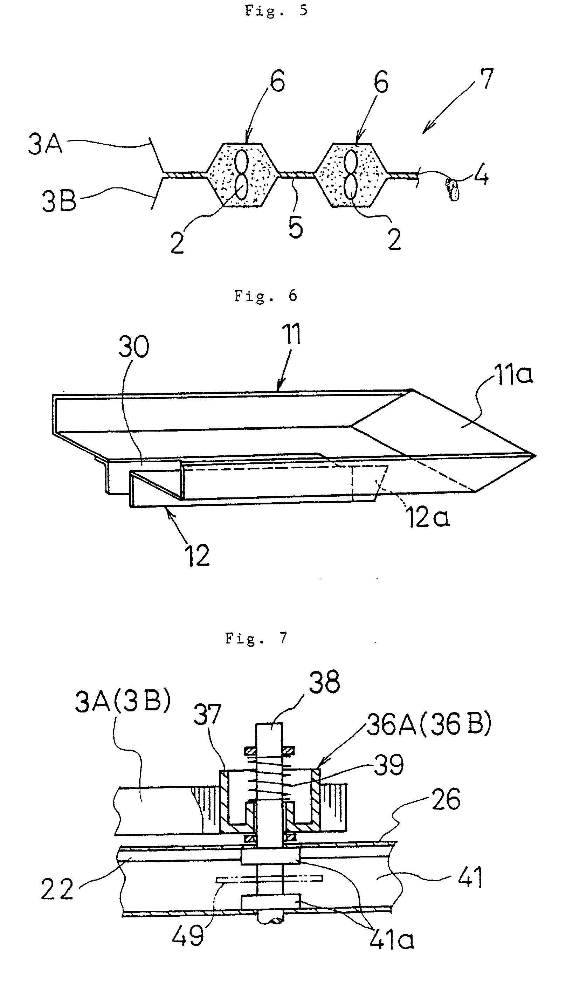

Multiple series of pots 1, as shown in Fig. 5, are formed in such a manner as two strips of paper 3A, 3B are bonded with a water resistant paste at a given pitch and pots 6 are to be formed between the bonded portions (connecting piece) and such a series of pots 7 are overlapped using a water soluble paste. About the details thereof, for instance, those are disclosed in Japanese Publication Nos. Sho 58-11817 and Hei 4-79612, so that detailed explanations are omitted here. This multiple series of pots 1 are stored in pressed-flat manner and when being developed, a plurality of pots 6 appeared like a honeycomb. When growing seedlings, the developed state is kept and accommodated in a seedling box (omitted). Then, those pots 1 are filled with soils and sown using an exclusive machine for filling soils and sowing automatically, and, for example, in a greenhouse a concentrated management for growing is carried out. Since every seedling 2 grows independently in a pot 6, mutual entanglement of roots are not generated, in addition, the above water soluble paste has been deteriorated due to a sprinkling of water at the time of growing seedling. Accordingly, after growing seedlings, when pulling out an end of the series of pots 7 put on the potted seedlings placing section 13 of the body 10, a series of pots 7 overlapped in multiple series of pots 1 is separated easily and taken out in a row as shown in Fig. 1. For reference, multiple series of pots 1 may be displaced from a seedling box (not shown) on the potted seedlings placing section 13 or put on there as being accommodated in the seedling box, and in the latter case, the adjacent edges of these boxes being bridged by connecting plates (not shown) for crossing the edge(s) for a series of pots 7 to be displaced easily.

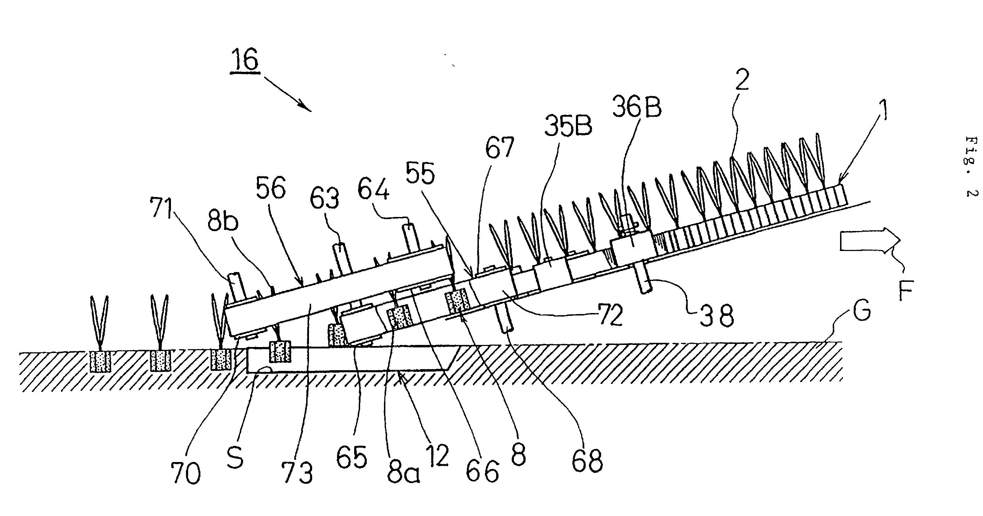

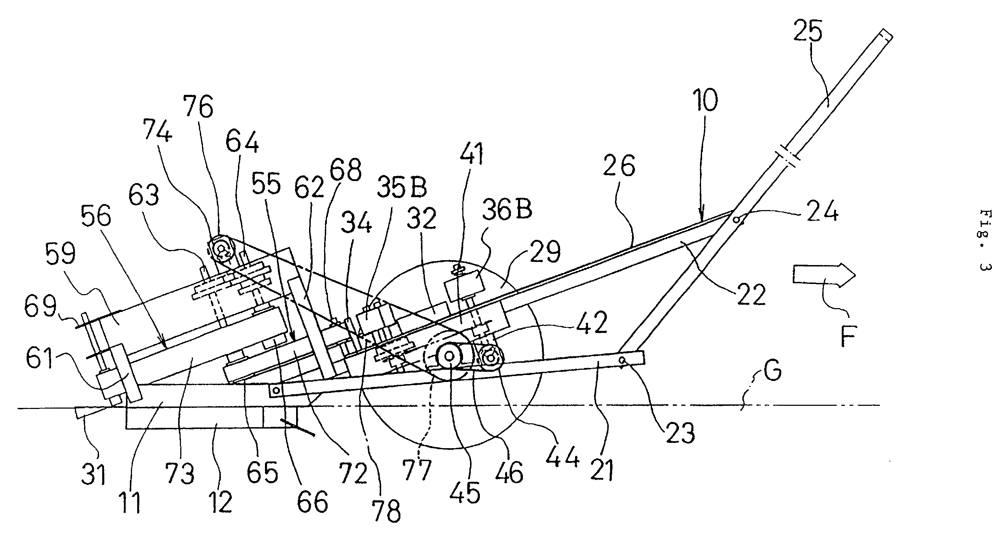

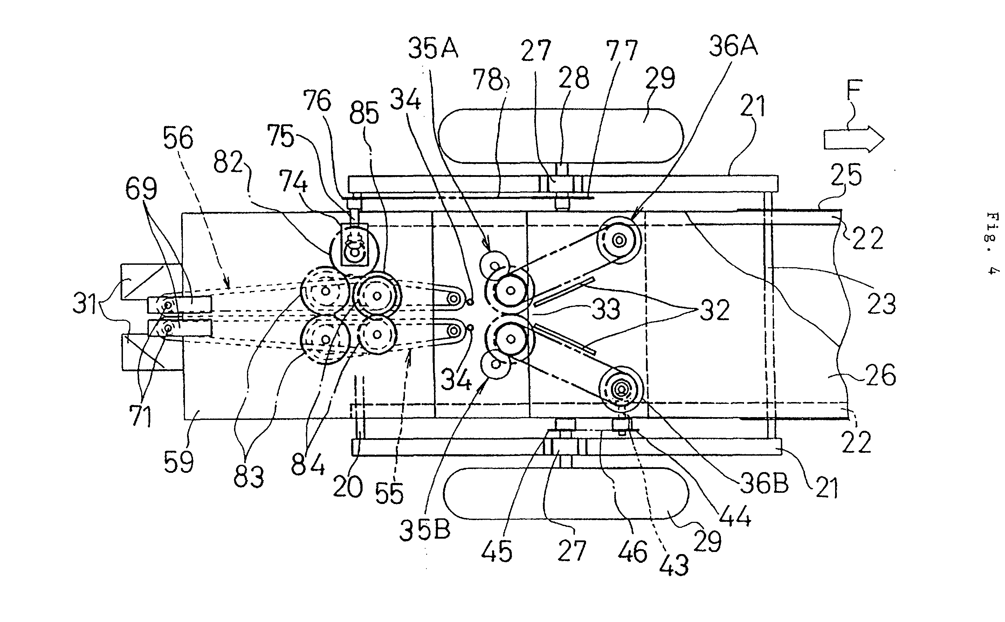

Turning back to the structure of the transplanting machine, on the above body 10, from the front side of advancing direction F (hereinafter, the front side of advancing direction F is referred to as a front side of the body, and an opposite side is referred to as a rear side of the body) in order, a potted seedling guide section 14 which guides in a row a series of pots taken out from the strips peeling off apparatus 15 which peels off two strips 3A and 3B of the series of pots 7 rightward and leftward taken out of the potted seedlings placing section 13 to expose the seedling 2 with soils from the pot 6, and a carrying conveyor 16 for carrying the seedlings 8 with soils fed from the strips peeling off apparatus 15 while keeping vertical condition toward the rear side of the body. The body 10 is comprised of a pair of first supporting frames 21 and a second supporting frames 22, one ends thereof are fixed using a shaft 20 (Fig. 4) common to the above ground gliding plate 11 and the other ends thereof are extended toward the front side of the body, a handle frame 25 having T-letter form, one ends of which are connected to the first frames 21 using a shaft 23 (Fig. 4) and an intermediate portions of which are connected to the second frames 22 using a shaft 24 (Fig. 3) and a supporting plate 26 fixed on the upper surface of the second frames 22. The second frames 22 are located inside the first frames 21 in such a manner as it is inclined upward toward the front side of the body from the ground sliding plate 11, accordingly the supporting plate 26 fixed on the second supporting frames 22 is inclined downward toward the rear side of the body. Between the above pair of first supporting frames 21, a wheel shaft 28 is bridged through bearings 27 (Fig. 4), both ends of which are extended outside the first supporting frames 21 through the bearings are provided with rolling wheels 29. The size of the rolling wheels are formed in such a manner as these sinks a little under the field surface G when the ground gliding plate 11 is as a whole in contact with the field surface G, so that when the body 10 is moved on the field surface G while the ground gliding plate 11 being in contact with the field surface G, the rolling wheels 29 roll on the field surface G. Here, said ground gliding plate 11, as shown in Fig. 6, is configured like a boat, an inclined wall 11a of the tip end side of which is directed toward the front side of the body. The ground gliding plate 11 is provided with an rectangular opening 30 formed on the intermediate portion of the bottom widthwisely from the rear end thereof toward the inclined wall 11a. This opening 30 is used as an outlet at the time of feeding the seedlings 8 with soils on the field surface G, which are carried by the carrying conveyor 16, and the width of the opening is formed at minimum sufficiently wide for the seedlings 8 with soils to pass through it. And, said opener 12 is configured in such a manner as two sheets of rectangular plate are provided to hang from both longitudinal edges of the opening 30 and tip ends of the plates directing toward the front side of the body are closed sharply as a sharp end portion 12a and the rear ends thereof are opened, so that, a spacing formed by two rectangular plates are adapted to cope with the opening 30. Therefore, the seedlings 8 with soils passing through the opening 30 then enter into the spacing and are grounded on the bottom of the planting groove S (Fig. 2) formed by the opener 12. For reference, the ground gliding plate 11 is provided with a pair of soil collecting plate 31, which is extended rearward at the rear portion of the body 10 in such a manner as it covers the width of the opening 30.

The above potted seedling guide section 14 is provided with a pair of guide plates 32 planted on the supporting plate 26 on the body 10 and right and left symmetrically. This pair of guide plates 32 are disposed in such a manner as these are opened sufficiently wide at the front side of the body and are narrowed at the rear side of the body to form a gate 33, and a series of pots 7 taken out from the potted seedlings placing section 13 are adapted to be taken out through the narrow gate 33 which is formed with a pair of guide plates 32.

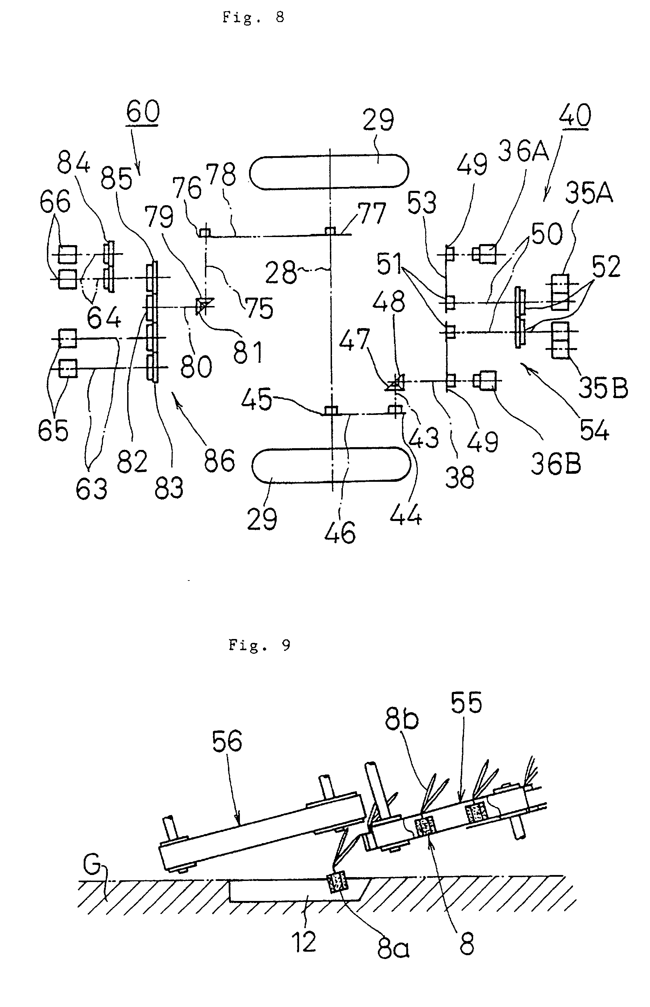

Further, the above strips peeling off apparatus 15 comprises a pair of guide members 34 disposed oppositely to the gate 33 of the potted seedlings guide section 14, a pair of taking-out rollers 35A, 35B and a pair of winding reels 36A, 36B. A pair of taking-out rollers 35A, 35B and a pair of winding reels 36A, 36B are adapted to be synchronized and driven with a later mentioned driving mechanism 40 (Fig. 8), and two strips 3A and 3B peeled off right and left from a series of pots 7 are taken out to the front side while turning around a pair of guide members 34 and wound around corresponding winding reels 36A, 36B respectively. For reference, each roller consisting of a pair of taking-out rollers 35A and 35B is provided with a concavo-convex such as serration in order to increase a friction resistance between the strips 3A, 3B and the rollers.

Each winding reel 36A or 36B is changed in its circumferential velocity according to the winding number (winding diameter) of strips 3A, 3B wound thereon, if the number of rotation is constant. So that, since a difference is generated between the winding velocity and the taking-out velocity of the strips 3A, 3B by a pair of taking-out rollers 35A, 35B, if the winding reels 36A, 36B are urged to continue to rotate, an inconvenience is generated in such a manner as the peeling off velocity of the strips 3A, 3B due to the strips peeling off apparatus 15 happens to become large more than expected or the strips 3A, 3B happen to be cut off. Therefore, in the first embodiment of the present invention, as shown in Fig. 7, every reel body 37 of the winding reels 36A, 36B is assembled independently around a rotary shaft 38 and these are adapted to be connected with a coil spring 39. By the construction such as the winding reels 36A, 36B, in accordance with the increase of the winding diameter thereof, the coil spring is distorted toward a winding direction and the reel body 37 rotates free of the rotary shaft 38, and the winding speed is arranged in such a manner as it accords with the taking-out speed of the strips 3A, 3B by the pair of taking-out rollers 35A, 35B. For reference, the rotary shaft 38 is supported with a pair of bearings 41a in a later-mentioned gear box 41 for use of the strips peeling off apparatus.

The gear box 41 for the strips peeling off apparatus is provided by being fixed, as shown in Fig. 3, to the second frame 22 of the body 10, and the above mentioned supporting plate 26 is for common use as a upper plate of the gear box 41. Under the gear box 41 a small gear box 42 is provided, where, as shown in Figs. 4 and 8, a horizontal shaft 43 which is horizontally extended in the widthwise direction of the body 10 and supported rotatably. The horizontal shaft 43 is provided with a sprocket 44 on its one end projected from the small gear box 42, and on this sprocket 44 a chain 46 is engaged which is also engaged with a sprocket 45 mounted on the wheel shaft 28 for use of the rolling wheels 29. On the other hand, on the other end of the horizontal shaft 43 introduced in the small gear box 42 a bevel gear 47 is mounted, with this bevel gear 47 is engaged a bevel gear 48 mounted on the lower end of the rotary shaft 38 (Fig. 7) of one winding roller 36B. That is, the rotation of the rolling wheels 29 is adapted in such a manner as it is transmitted to the horizontal shaft 43 through both of the sprockets 45, 44 and the chain 46 and to the rotary shaft 38 through both of the bevel gears 47 and 48.

Now, in the gear box 41, a sprocket 49 mounted on every rotary shaft 38 of the winding reels 36A, 36B, a sprocket 51 mounted on every rotary shaft 50 of the taking-out rollers 35A, 35B and a gear 52 and a driving force transmitting mechanism 54 including the chain connecting the sprockets 49 and 51 are disposed (Fig. 8). This driving force transmitting mechanism 54 , the horizontal shaft 43, the chain 46, the rolling wheels 29 and so on constitute the above mentioned driving mechanism 40 and the rolling wheels 29 are used as a driving power source for the taking-out rollers 35A, 35B and the winding reels 36A, 36B. The rolling wheels 29 roll on the field, as mentioned above, while the ground gliding plate 11 being in contact with the field surface G and being displaced in the advancing direction F of the body 10, and according to the movement of the body 10, the pair of taking-out rollers 35A, 35B and the pair of winding reels 36A, 36B are rotated. For reference, in the driving mechanism 40 its gear ratio or pulley ratio are settled in such a manner as the peeling off velocity of the strips 3A, 3B by the strips peeling off apparatus 15 is sufficiently reduced to the moving velocity of the body 10.

Further, the above carrying conveyor 16 is structured from a first conveyor 55 which carries the seedlings with soils fed from the strips peeling off apparatus 15 by clamping the roots block portion 8a thereof and a second conveyor 56 which carries the seedling 8 with soils by clamping the leaf portion 8b. The first conveyor 55 is positioned in such a manner as an initial end thereof approaches to the guide member 34 of the strips peeling off apparatus 15, on the other hand a leading end of the second conveyor 56 is disposed above a trailing end of the first conveyor 55 like overlapping such end. And, in this first embodiment, the first and second conveyors 55 and 56 consist of a pair of conveyors respectively and are adapted to be rotated by being driven by a driving mechanism 60 (Fig. 8) accommodated in a gear box 59 for use of conveyor which is disposed above the ground gliding plate 11 of the body 10.

In more detail, the gear box 59 for use of conveyor is fixed to the upper ends of brackets 61, 62 (Fig. 3) extended upward from the ground gliding plate 11 and the second supporting frame 22, and the whole structure is inclined downward toward the rear end of the body 10 like the supporting plate 26 on the second supporting frame 22. In this gear box 59, two pair of rotary shafts 63, 64 are supported through bearings (not shown) rotatably and perpendicularly to the upper and lower plates. Two pair of rotary shafts 63, 64 are disposed along the longitudinal direction of the body 10 and juxtaposed with each other, and the lower ends thereof are extended largely downward from the gear box 59. And, the lower ends of the one pair of rotary shafts 63 disposed at the rear side of the body are provided with driving pulleys 65 for use of the first conveyor 55, and the lower ends of the other pair of rotary shafts 64 are provided with driving pulleys 66 for use of the second conveyor 56 respectively( Fig. 2 and 3).

The supporting plate 26 of the second supporting frame 22 is provided with a pair of a supporting shafts 68 which support following pulleys 67 for use of the first conveyor 55 adjacent to the pair of guide member 34 in the strips peeling off apparatus 15, and at the rear end of the gear box 59 a pair of supporting shafts 71 (Figs. 2 and 3) for supporting following pulleys 70 for use of the second conveyor 56 using a bracket 69 are mounted respectively. Each of the first and second conveyors 55, 56 are respectively provided with a pair of endless belts 72, 73 hung over the driving pulleys 65, 66 and the following pulleys 67, 70, and the spacing of a pair of endless belts of the first conveyor 55 is adapted to clamp and convey the root block portion 8a of the seedling 8 with soils and the spacing of a pair of endless belts 73 of the second conveyor 56 is adapted to arrange to clamp and convey the leaf portion 8b of the seedling 8 with soils. Now, Every of the endless belts 72, 73 is preferably attached with flexible foams of plastic at least on the surface thereof for avoiding the roots block 8a of the seedling 8 with soils or the leaf portion 8b of the seedling 8 with soils from being damaged.

On the gear box 59 for use of conveyor, as shown in Figs. 3 and 4, a small gear box 74 is provided, and in this gear box 74 a horizontal shaft 75 extended horizontally toward the widthwise direction of the body is supported rotatably. The horizontal shaft 75 is provided with a sprocket 76 on its one end extended out of the small gear box 74, and on this sprocket 76 a chain 78, which is hung on the sprocket 77 mounted on the wheel shaft 28 for use of rolling wheels 29, is hung. On the other hand, on the other end of the horizontal shaft 75 introduced in the small gear box 74, as shown in Fig. 8, a bevel gear 79 is mounted, the bevel gear 79 is engaged with a bevel gear 81 mounted on the upper end of the intermediate shaft 80 extended upward from the inside of the gear box 59. That is, the rotation of the rolling wheels 29 is adapted to be transmitted to the horizontal shaft 75 through both of the sprockets 77, 76 and the chain 78, then through both of the bevel gears 79, 81 to the intermediate shaft 80.

On the other hand, in the gear box 59, as shown in Figs. 4 and 8, the intermediate gear 82 mounted on the intermediate shaft 80, a pair of gears 83 mounted on the pair of rotary shafts 63 for use of the first conveyor 55, a pair of gears 84 mounted on the pair of rotary shafts 64 for the second conveyor 56 and a driving power transmitting mechanism 86 including transmitting gear 85 and so on for transmitting the rotation of the intermediate gear 82 to one of the rotary shaft 64 for use of the second conveyor 56 are disposed. This driving power transmitting mechanism 86, the intermediate shaft 80, the horizontal shaft 75, the chain 78 and the rolling wheels 29 and so on constitute the above driving mechanism 60 and the rolling wheels 29 function as driving power source for the first and second conveyors 55, 56. For reference, the driving power transmitting mechanism 86 is adapted to be settled with its gear ratio in such a manner as the first and second conveyors 55, 56 rotate at the same velocity. Further, the driving mechanism 60 is adapted to be settled with its gear ratio or pulley ratio in such a manner as the first and second conveyors 55 and 56 carry the seedlings 8 with soils at the same speed to the one of the displacement of the body 10.

Hereinafter, an explanation of the transplanting processes using the machine for transplanting thus constructed will be carried out.

At the time of transplanting, in advance a series of pots 7 is taken out from a multiple series of pots 1 placed on the potted seedlings placing section 13, then two strips 3A, 3B located at the tip end side taken out are peeled off by hands by an appropriate length, and each of strips 3A, 3B is taken out further around the guide member 34 of the strips peeling off apparatus 15 toward the front side of the body 10, and each of tips of the strips 3A, 3B is held on the reel body 37 (Fig. 7) of the winding reels 36A, 36B respectively, which correspond to the taking-out rollers 35A and 35B. Then, the series of pots 7 are in the state where these are taken out through the gate 33 of the pair of guide plates 32 of the seedling guide section 14 in the rear side of the body 10.

After finishing the above process, by grasping the handle frame 25 of the body 10 the body 10 is moved toward the advancing direction F while making the ground gliding plate 11 in contact with the field surface G. then, the rolling wheels 29 mounted on the body 10 roll on the field surface G, and the rotation of which is transmitted simultaneously through each of the driving mechanism 40, 60 (Fig. 8)to the strips peeling off apparatus 15 and a carrying conveyor 16. That is, the pair of taking-out rollers 35A, 35B of the strips peeling off apparatus 15 clamp the strips 3A, 3B and apply them a tension to peel off the strips 3A, 3B right and left continuously at the bonded portion 5 (Fig. 5). By this peeling off of two strips 3A and 3B, the seedling 2 in each pot 6 is exposed in turn with soils and fed as a seedling with soils 8 piece by piece toward the carrying conveyor 16 and on the other hand each of the peeled off strips 3A, 3B is wound in turn by the corresponding winding reel 36A, 36B. At that time, in each of the winding reels 36A, 36B, the reel body 37 is slipped against the rotary shaft 38 in accordance with the increase of the winding diameter, so that the circumferential velocity is kept self-regulated and the peeling off velocity of the strips 3A, 3B is kept constant.

On the other hand, the carrying conveyor 16 transmitted with the rotation of the rolling wheels 29 through driving mechanism 60 receives its rotation to the pair of rotary shaft 63, 64 to rotate the pair of driving pulleys 65, 66. Thereby, the first and second conveyors 55, 56 revolve at the same circumferential velocity in the same direction. The seedlings 8 fed from the strips peeling off apparatus 15, because the initial end of the first conveyor 55 is located nearby the guide member 34 or due to a reaction at the time of peeling off process, advances between a pair of endless belts 72 of the first conveyor 55 and the first conveyor 55 carries the seedling toward the rear side of the body 10 by clamping the root block portion 8a of the seedling 8 with soils.

In this case, the carrying velocity of the first conveyor 55 is settled, as described above, in such a manner as it is larger than the one of peeling off of two strips 3A, 3B, thereby the seedlings 8 with soils are carried keeping the mutual spacing (pitch) larger than the spacing between pots 6 in a series of pots 7.

The seedling 8 with soils carried to the rear side of the body with the first conveyor 55 is clamped in its leaf portion 8b at the trailing end area thereof by the pair of endless belts 73 of the second conveyor 56. And, the seedlings 8 with soils, the root block portion 8a, simultaneously with being released from the pair of endless belts 72 of the first conveyor 55, it is displaced totally into the second conveyor 56, and is carried further into the rear side of the body. Then, since the trailing end of the first conveyor 55 and the initial end of the second conveyor 56 are overlapped mutually, while the root block 8a of the seedling 8 with soils is still clamped in the first conveyor 55, the second conveyor 56 clamps the leaf portion 8b of the seedling with soils, which guarantee the receiving and delivering of the seedlings with soils from the first conveyor 55 to the second conveyor 56. For reference, for instance as shown in Fig. 9, if the trailing end of the first conveyor 55 and the initial end of the second conveyor are not overlapped, in case the leaf portion 8a of the seedling 8 with soils carried by the first conveyor 55 is inclined toward the front side of the body, timing of receiving and delivering of the seedling is diverged to cause the seedlings 8 with soils to fall down from the carrying conveyor 16.

The seedling 8 with soils during carrying toward the rear side of the body by the second conveyor 56, since the leaf portion 8b is clamped, as shown in Fig. 2, the portion lower that leaf portion 8b is fallen down vertically due to the self-weight. And, also since the second conveyor 56 is inclined toward the rear side of the body, the vertically fallen down portion of the seedling 8 with soils begins to enter into the planting groove S formed by the opener 12 through the opening 30 (Fig. 6) of the ground gliding plate 11 on the way of carrying. The seedling 8 with soils touches the field at the stage where the seedling 8 with soils is carried near the trailing end of the second conveyor 56, and is released from the second conveyor 56 and stands on the bottom of the groove S. Then, in accordance with the moving of the body 10, the seedling with soils are released also from opener 12, and the root block portion 8a is completely buried by the soils collected with a soil collecting plate 31. Since the seedlings with soils are carried at the spacing greater than the mutual spacing of the pots 6, as stated above, in the series of pots 7, the pitch of the seedlings planted in the field G becomes sufficiently great.

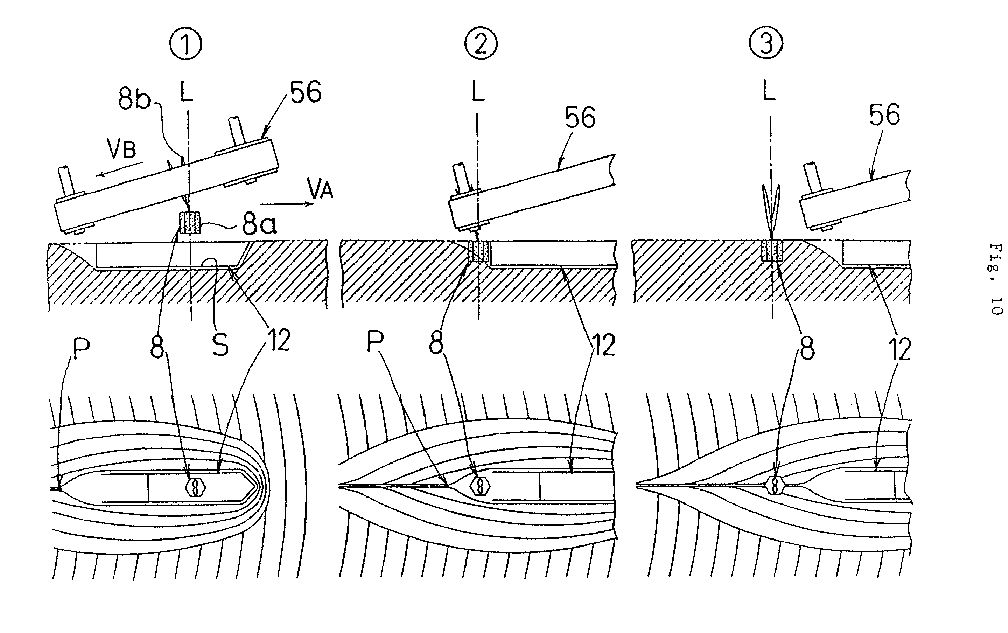

And, in the first embodiment of the present invention, since the displacement velocity V_{A} of the body 10 and the carrying velocity V_{B} of the seedlings 8 with soils of the first and second conveyors 55, 56 is same (V_{A} = V_{B}), as shown in Fig. 10, the seedlings 8 with soils during carrying with the second conveyor 56 stand still at a certain position L to the field surface G. Therefore, if the body 10 continues to move at the velocity V_{A} as it is, the seedlings with soils 8, as shown at ① - ③ in Fig. 10, at the stationary position L descend and contact vertically the bottom of the planting groove S and is released as it is. That is, to the seedlings with soils, at the time of contacting the field, any inertia from the body 10 or the second conveyor 56 does not act thereon, which prevents the seedlings from falling. Further, soils around the planting groove S formed by the opener, as shown in Fig. 10, are collapsed as the opener 12 passed and joined at the point P just after the trailing end of the opener 12 ( ① ), but the seedlings 8 with soils contact the field just advanced position than the joining point P ( ② ), so that, there is no risk of riding on the joined soils and fallen down, rather the root block portion 8a of the seedlings 8 with soils are buried with joined back soils smoothly (③).

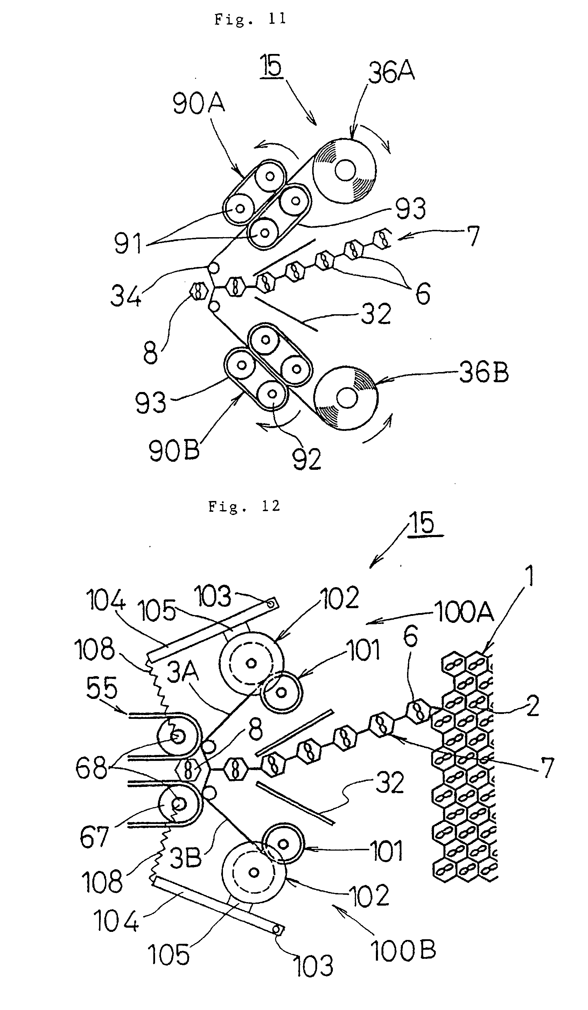

For reference, the taking-out rollers 35A and 35B can be, for instance as shown in Fig. 11, replaced with a pair of conveyors 90A and 90B. Each pair of conveyors 90A, 90B are formed in such a manner as endless belts 93 are hung between driving pulleys 91 and follower pulleys 92. The rotation of the driving mechanism 40 drives the driving pulleys 91 and by the clamping force between the endless belts 93 the strips of 3A and 3B are taken out.

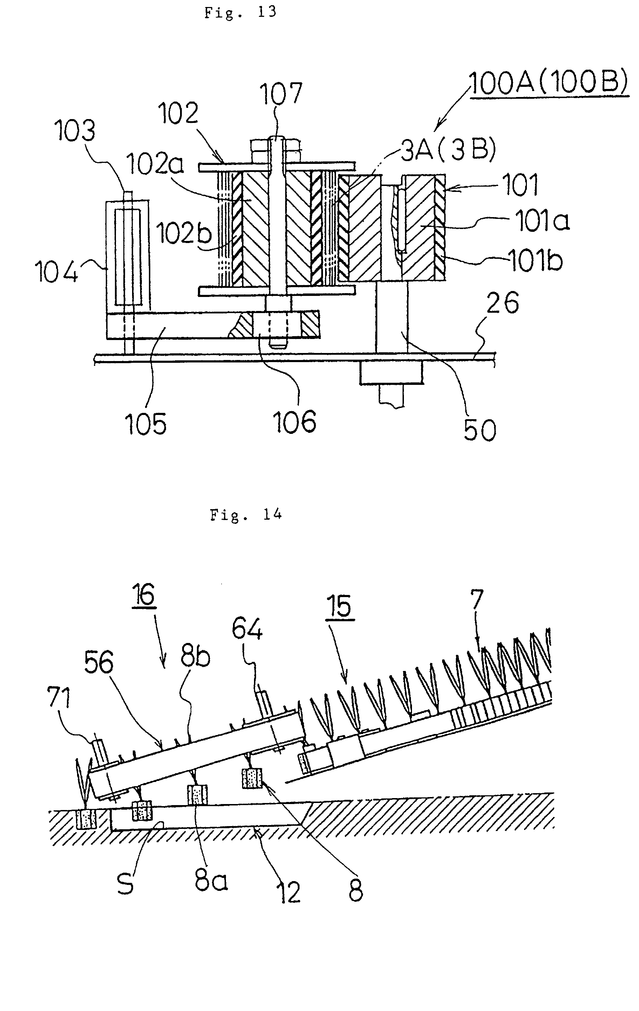

Fig. 12 and 13 show a second embodiment of the present invention. The feature of the second embodiment of the present invention resides in that the function of the above pair of taking-out rollers 35A, 35B of the strips peeling off apparatus 15 and the pair of winding reels 36A, 36B is put together into one taking-out unit 100A, 100B. That is, each of the taking-out unit 100A and 100B comprises a driving roller 101 coupled and fixed on a rotary shaft 50 (Fig. 8) to be driven by the driving mechanism 40 and one winding reel 102 for winding the strips 3A, 3B in cooperation with the driving roller 101.

The above winding reel 102 is supported rotatably on the tip end of an supporting arm 105 extended from a turning plate 104 to be turned on a shaft 103 planted on the supporting plate 26 of the body 10 through a bearing 106 and rotary shaft 107. On the other hand, a free end of the turning plate 104 biased always resiliently into the central side of the body 10, thereby each of the winding reel 102 is adapted to be pressed on the circumference of the driving roller 101. The driving roller 101 and the winding reel 102 are made from, as shown in Fig. 13, a compound member comprising a plastic ring 101b and a plastic ring 102b having a little resiliency respectively. And, the surface of each plastic ring 101b or 102b becomes concavo-convex such as serration (not shown) to increase a friction resistance between the strips 3A, 3B.

In the strips peeling off apparatus 15 having the above strips taking-out unit 100A, 100B, two strips of 3A, 3B taken out from a series of pots 7 are further taken out toward the front side of the body while turning around the guide member 34 respectively, and the taken out ends thereof are fixed on the winding reels 102 through the driving rollers 101 of the taking-out units 100A, 100B and the winding reels 102. Under this status, when the body 10 moves in the advancing direction F while the ground gliding plate 11 being in contact with the field surface G, the rolling wheels 29 mounted on the body 10 roll on the field surface G, the rotation of which is transmitted simultaneously to the strips peeling off apparatus 15 and the carrying conveyor 16 through the driving mechanisms 40, 60 (Fig. 8), and thereby the driving roller 101 of the taking-out units 100A, 100B is rotated. Then, since the winding reel 102 presses the strips 3A, 3B resiliently against the circumference of the driving roller 101 by the spring force of the compressed spring 108, in accordance with the driving roller 101, the winding reel 102 rotates, and eventually a tension acts on the strips 3A, 3B. So that, a force in peeling off direction is applied to a series of pots 7, two strips 3A, 3B are peeled off right and left gradually, and the seedlings 8 with soils exposed from each pot 6 are clamped and carried by the first and second conveyors 55, 56 to be planted in the planting groove S.

On the other hand, when each of the strips 3A, 3B peeled off is wound around the corresponding winding reel 102, since the circumferential velocity thereof is synchronized with the taking-out velocity, there is no risk where any unnecessary force is applied to the strips 3A, 3B. That is, according to the second embodiment, it is not necessary to prepare a means (spring etc) which regulates the circumferential velocity automatically like in the first embodiment, and in addition, it may become unnecessary to provide the special driving force transmitting mechanism 54 and the structure of the strips peeling off apparatus 15 becomes simpler than that of the first embodiment.

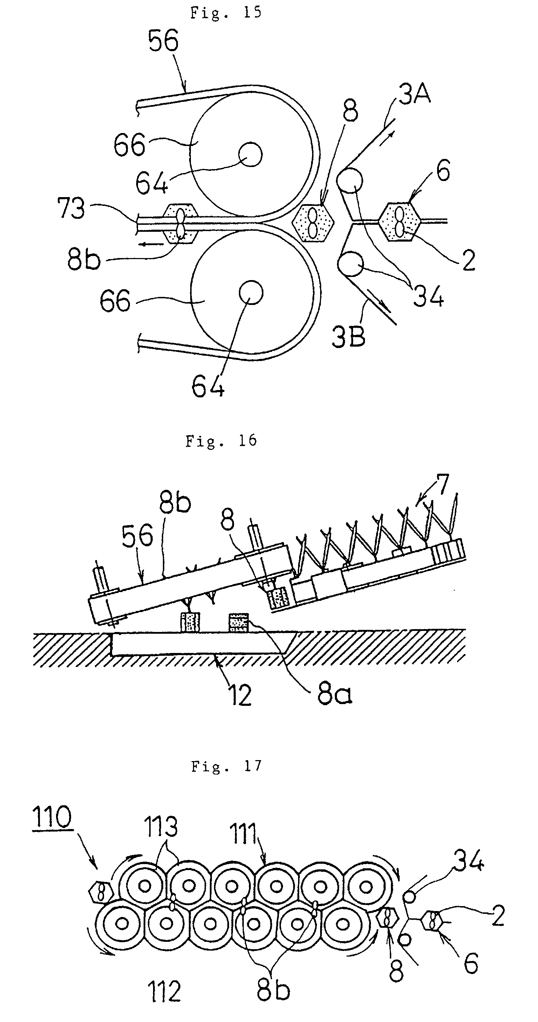

Figs. 14 and 15 show a third embodiment of the present invention. The feature of this embodiment resides in that, as the carrying conveyor 16 in the first embodiment of the present invention, by omitting the first conveyor 55, merely the second conveyor 56 is used. In this case, the second conveyor 56 is disposed in such a manner as its initial end is located nearby the pair of guide member 34 of the strips peeling off apparatus 15. In this third embodiment, the second conveyor 56 clamps the leaf portion 8b of the seedlings 8 with soils fed from the strips peeling off apparatus 15 and carries these toward the rear side of the body and, as well as in the first embodiment, feed these into the plantive groove S formed by the opener 12 to carry out the transplanting similarly as in the first embodiment.

According to the third embodiment of the present invention, to the extent of omitting the first conveyor 55, the structure of the carrying conveyor 16 and the driving mechanism 60 become simple to attain a downsizing of the machine for transplanting. However, as shown in Fig. 16, in case where the leaf portions of adjacent seedlings are overlapped each other when taking out from a series of pots 7, at the time clamping the seedlings 8 with soils fed from the strips peeling off apparatus 15 by the second conveyor 56, a following seedling 2 still in a form of a series potted seedlings is also clamped together to cause it to be pulled out.

For reference, the second conveyor 56 forming the above carrying conveyor 16, as shown in Fig. 17, may be formed in such a manner as it is constituted as a roller conveyor 110 consisting of two rows of a plurality of rotary rollers 111. In this case, each roller 111 is formed with a compound structure in which a core 112 is coupled with a ring 113 having flexibility and each roller is disposed in such a manner as the every ring 113 is pressed each other. Thus formed roller conveyor 110 clamp the seedling 8 with soils fed from the strips peeling off apparatus 15 between the rings 113 of each roller 111 and carries them in turn toward the rear side of the body, which functions identically with the second conveyor 56. It is a matter of course that this roller conveyor 110 may use in place of the first conveyor 55 in the first embodiment.

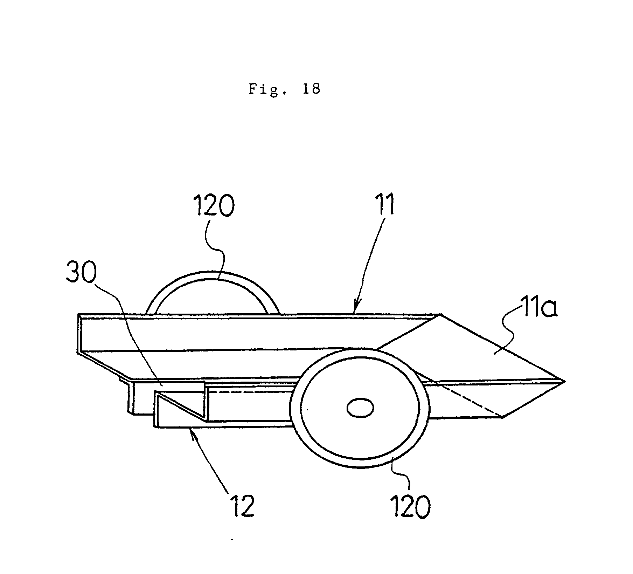

Further, the above body 10, as shown in Fig. 18, may be constructed in such a manner as rolling wheels 120 are provided on both sides of the ground gliding plate 11. In this case, the body 10 is supported with this pair of rolling wheels 120 and the above mentioned pair of rolling wheels 29 disposed at the front side on the field surface G, so that, although the total weight is increased with loading of such as strips peeling off apparatus 15 and the carrying conveyor 16, its displacement becomes easy to reduce the necessary human power.

In the present invention, the above body 10 may be operated with a power source in place of human, or may be drawn by such as a tractor. In case where the tractor is driven by any power, for instance, any engine, any electric motor loaded on the body 10, thereby the rolling wheels 29 or wheels 120 are driven, or an electric motor assembled in the rolling wheels or wheels 120 may drive them directly.

Further, in the present invention, as a driving power source for the above mentioned strips peeling off apparatus 15 and the carrying conveyor 16, in place of the rolling wheels 29 of every embodiment, special power source such as electric motors and engines may be used, and in these cases, such can be installed on appropriate position like on the body 10.

In the present invention, the selection of the material to be used for the strips 3A, 3B to form the above series of pots 7 is arbitrary, and can use for instance such as paper, plastic sheet or cloth. Further, it is also arbitrary how to bond these strips, and in place of bonding with water resistant adhesives 4, for instance, bonding by heat, solvent or sewing can be used.

As explained in detail, according to the machine for transplanting, by setting the ratio between the peeling velocity of the strips peeling apparatus and the carrying velocity of the seedlings with soils by the carrying conveyor, the pitch between the seedlings to be transplanted can be arbitrarily settled, eventually the applicable scope becomes broader.

Further, since the machine of the present invention is formed merely by putting the strips peeling off apparatus and the carrying conveyor on the conventional body of a simple type of ground-contacting planting machine, the total dimension does not become large and can maintain the characteristic of downsizing.

Further, since the machine for transplanting of the present invention can use the current series of pots in many use as it is, it can maintain advantage in a concentric growing of the seedlings. In addition, since it can transplant the seedlings with soils, the seedlings are not prevented from growing of the roots due to the pot, which leads to a general and high applicability of the present invention.

## Claims

1. A machine for transplanting seedlings on a field, synchronized with moving of the machine, to be grown in a multiple series of pots (1) which are formed by bonding a series of pots (7) using a water soluble paste, which is formed by bonding two strips (3A, 3B) at a given pitch, comprising a body (10) having an opener (12) to form a transplanting groove (S) in a field on its rear end side in an advancing direction of moving of the machine, on the body (10) from a front side of the advancing direction in turn, a multiple series of potted seedlings placing section (13), a guide section (14) for a series of potted seedlings taken out in a row from the potted seedlings placing section (13), said machine is **characterized by** a two strips peeling off apparatus (15) to separate the bonded two strips (3A, 3B) to expose the seedlings (8) with soils, a carrying conveyor (16) to clamp and carry the seedlings (8) with soils in a standing posture toward the rear end of the body (10), thereby feeding directly the seedlings (8) with soils from the carrying conveyor (16) into the transplanting groove (S).

2. A machine for transplanting seedlings according to claim 1, wherein a carrying velocity of the carrying conveyor (16) is settled with the moving velocity of the body (10).

3. A machine for transplanting seedlings according to claim 1 or 2, wherein, on the body (10), rolling wheels (29) which roll on the field in accordance with the mooving of the body (10) are provided, and the rolling wheels (29) function as a source for driving the strips peeling off apparatuos (15) and the carrying conveyor (16).

4. A machine for transplanting seedlings according to claim 1, wherein the strips peeling off apparatus (15) is adapted to take out the separated strips (3A, 3B) toward the front side of the advancing direction of the body (10).

5. A machine for transplanting seedlings according to claim 1 or 2, wherein the carrying conveyor (16) is adapted to clamp leaf portions (8b) of the seedlings (8).

6. A machine for transplanting seedlings according to claim 1 or 2, wherein the carrying conveyor (16) is consisted of a first conveyor (55) for carrying the seedlings (8) by clamping root block portion (8a) of the seedlings and a second conveyor (56) for clamping leaf portions (8b) of the seedlings, and an initial portion of the second conveyor (56) is overlapped over a trailing end of the first conveyor (55).

7. A machine for transplanting seedlings according to claim 6 or 7, wherein the carrying conveyor (16) is consisted of a pair of belt conveyors.

8. A machine for transplanting seedlings according to claim 6 or 7, wherein the carrying conveyor (16) is inclined downward in the rear side of the advancing direction of the body (10).

9. A machine for transplanting seedlings according to claim 1 wherein the strips peeling off apparatus (15) is consisted of a pair of guide members (34) for introducing two strips (3A, 3B) separated from a series of potted seedlings into the peeling off direction, a rotary and taking-out means (35A, 35B) for clamping the strips turning around the guid members (34) respectively and winding reels (36A, 36B) the taken out strips by the rotary and taking-out means (35A, 35B).

10. A machine for transplanting seedlings according to claim 9, wherein the rotary and taking-out means (35A, 35B) is disposed at the strips taken out and turned around the guid member (34) stand by for taking-out toward the seedlings placing section (13).

11. A machine for transplanting seedlings according to claim 9 or 10, wherein the rotary and taking-out means (35A, 35B) is formed with a pair of rotary rollers.

12. A machine for transplanting seedlings according to claim 9 or 10, wherein the rotary and taking-out means (35A, 35B) is formed with a pair of rotary belts.

13. A machine for transplanting seedlings according to claim 11, wherein the one of the pair of rotary rollers are replaced with winding reels (103), said winding reels (103) are provided with a biasing means (108) for biasing against the rollers (102).

## Patentansprüche

1. Maschine zum Verpflanzen von Sämlingen auf einem Feld, synchronisiert mit der Bewegung der Maschine, zur Pflanzung in mehreren Reihen von Töpfen (1), die durch Bondieren einer Reihe von Töpfen (7) unter Verwendung einer wasserlöslichen Paste gebildet werden, die durch das Bondieren von zwei Streifen (3A, 3B) in einem vorgegebenen regelmäßigen Abstand gebildet werden, umfassend einen Körper (10) mit einem Öffner (12) zum Bilden einer Verpflanzungsrille (S) in einem Feld an seiner in einer Fortbewegungsrichtung der Maschine rückwärtigen Seite, auf dem Körper (10) auf einer in der Fortbewegungsrichtung vorderen Seite seinerseits einen Ablage-Abschnitt (13) für eine Vielzahl von Reihen eingetopfter Sämlinge, einen Leitabschnitt (14) für eine Reihe eingetopfter Sämlinge, die in einer Reihe aus dem Ablage-Abschnitt (13) für eingetopfte Sämlinge herausgenommen wurden, wobei die Maschine **gekennzeichnet ist durch** eine Zwei-Streifen-Abschäivorrichtung (15) zum Trennen der beiden gebondeten Streifen (3A, 3B) zum Freisetzen der Sämlinge (8) mit Pflanzerde, eine Transport-Fördereinrichtung (16) zum Einspannen und Transportieren der Sämlinge (8) mit Pflanzerde in einer stehenden Position zum hinteren Ende des Körpers (10), wodurch die Sämlinge (8) mit Pflanzerde direkt von der Transport-Fördereinrichtung (16) in die Verpflanzungsrille (S) eingebracht werden.

2. Maschine zum Verpflanzen von Sämlingen nach Anspruch 1, bei der eine Transportgeschwindigkeit der Transport-Fördereinrichtung (16) auf die Fortbewegungsgeschwindigkeit des Körpers (10) eingestellt ist.

3. Maschine zum Verpflanzen von Sämlingen nach Anspruch 1 oder 2, bei der auf dem Körper (10) Rollräder (29), die gemäß der Bewegung des Körpers (10) auf einem Feld rollen, vorgesehen sind, und die Rollräder (29) als eine Antriebsquelle für die Streifen-Abschälvorrichtung (15) und die Transport-Fördereinrichtung (16) dienen.

4. Maschine zum Verpflanzen von Sämlingen nach Anspruch 1, bei der die Streifen-Abschälvorrichtung (15) so ausgelegt ist, dass er die getrennten Streifen (3A, 3B) zur in der Fortbewegungsrichtung des Körpers (10) vorderen Seite hin wegnimmt.

5. Maschine zum Verpflanzen von Sämlingen nach Anspruch 1 oder 2, bei der die Transport-Fördereinrichtung (16) so ausgelegt ist, dass sie Sprossteile (8b) der Sämlinge (8) einspannt.

6. Maschine zum Verpflanzen von Sämlingen nach Anspruch 1 oder 2, bei der die Transport-Fördereinrichtung (16) aus einer ersten Fördereinrichtung (55) zum Transportieren der Sämlinge durch Einspannen von Wurzelballenteilen (8a) der Sämlinge und einer zweiten Fördereinrichtung (56) zum Einspannen von Sprossteilen (8b) der Sämlinge besteht, und sich ein Anfangsteil der zweiten Fördereinrichtung (56) mit einem hinteren Ende der ersten Fördereinrichtung (55) überlappt.

7. Maschine zum Verpflanzen von Sämlingen nach Anspruch 6 oder 7, bei der die Transport-Fördereinrichtung (16) aus einem Paar Förderbändern besteht.

8. Maschine zum Verpflanzen von Sämlingen nach Anspruch 6 oder 7, bei der die Transport-Fördereinrichtung (16) zum in Fortbewegungsrichtung hinteren Ende des Körpers (10) nach unten geneigt ist.

9. Maschine zum Verpflanzen von Sämlingen nach Anspruch 1, bei der die Streifen-Abschälvorrichtung (15) aus einem Paar Leitelementen (34) zum Einführen zweier Streifen (3A, 3B), die von einer Reihe eingetopfter Sämlinge in der Abschälrichtung abgetrennt werden, Rotations- und Herausnahme-Mitteln (35A, 35B) zum Einspannen der Streifen, die um die jeweiligen Leitelemente (34) geführt werden, und Wickelrollen (36A, 36B) zum Aufwickeln der durch die Rotations- und Herausnahme-Mittel (35A, 35B) herausgenommenen Streifen besteht.

10. Maschine zum Verpflanzen von Sämlingen nach Anspruch 9, bei der die Rotations- und Herausnahme-Mittel (35A, 35B) da angeordnet sind, wo die Streifen herausgenommen und um das Leitelement (34) geführt wurden, und zur Herausnahme zum Ablage-Abschnitt (13) für Sämlinge hin bereitstehen.

11. Maschine zum Verpflanzen von Sämlingen nach Anspruch 9 oder 10, bei der die Rotations- und Herausnahme-Mittel (35A, 35B) aus einem Paar rotierender Walzen gebildet sind.

12. Maschine zum Verpflanzen von Sämlingen nach Anspruch 9 oder 10, bei der die Rotations- und Herausnahme-Mittel (35A, 35B) aus einem Paar rotierender Bänder gebildet sind.

13. Maschine zum Verpflanzen von Sämlingen nach Anspruch 11, bei der eines der Paare rotierender Walzen durch Wickelrollen (103) ersetzt sind, wobei die Wickelrollen (103) mit Vorspannmitteln (108) zum Vorspannen gegen die Walzen (102) ausgerüstet sind.

## Revendications

1. Machine pour transplanter des jeunes plants sur un champ synchronisée avec le déplacement de la machine, les jeunes plants devant pousser dans une série multiple de pots (1) qui sont formés en liant une série de pots (7) utilisant une pâte soluble à l'eau qui est formée en liant deux bandes (3A, 3B) à un certain écartement, comprenant un corps (10) ayant une ouvreuse (12) pour former une rainure de transplantation (S) dans un champ sur son côté d'extrémité arrière dans un sens de déplacement en avant de la machine sur le corps (10) à partir d'un côté frontal du sens d'avancement en alternance, une section de placement (13) de séries multiples de jeunes plants en pots, une section guide (14) pour une série de jeunes plants en pots extraite d'une rangée de la section de placement de jeunes plants en pots (13), la machine étant **caractérisée par** un appareil pour dénuder deux bandes (15) pour séparer les deux bandes liées (3A, 3B) pour exposer les jeunes plants (8) avec la terre, un transporteur qui porte (16) pour serrer et porter les jeunes plants (8) avec la terre dans une position debout vers l'extrémité arrière du corps (10) en alimentant directement les jeunes plants (8) en terre à partir du transporteur qui porte (16) dans la rainure de transplantation (S).

2. Machine pour transplanter des jeunes plants selon la revendication 1 dans laquelle une rapidité de transport du transporteur qui porte (16) est fixée avec la rapidité de déplacement du corps (10).

3. Machine pour transplanter des jeunes plants selon la revendication 1 ou 2 dans laquelle des roues de roulement (29) qui roulent sur le champ selon le déplacement du corps (10) sont prévues sur le corps (10) et les roues de roulement (29) fonctionnent comme une source de commande de l'appareil pour dénuder les bandes (15) et du transporteur qui porte (16).

4. Machine pour transplanter des jeunes plants selon la revendication 1 dans laquelle l'appareil pour dénuder les bandes (15) est adapté pour extraire les bandes séparées (3A, 3B) vers le côté frontal du sens d'avancement du corps (10).

5. Machine pour transplanter des jeunes plants selon la revendication 1 ou 2 dans laquelle le transporteur qui porte (16) est adapté pour serrer des portions de feuille (8b) des jeunes plants (8).

6. Machine pour transplanter des jeunes plants selon la revendication 1 ou 2 dans laquelle le transporteur qui porte (16) consiste en un premier transporteur (55) pour porter les jeunes plants (8) en serrant la portion du bloc des racines (8a) des jeunes plants et un second transporteur (56) pour serrer des portions de feuille (8b) des jeunes plants, et une portion initiale du second transporteur (56) est recouverte partiellement sur une extrémité de derrière du premier transporteur (55).

7. Machine pour transplanter des jeunes plants selon la revendication 6 ou 7 dans laquelle le transporteur qui porte (16) consiste en une paire de transporteurs à courroie.

8. Machine pour transplanter des jeunes plants selon la revendication 6 ou 7 dans laquelle le transporteur qui porte (16) est incliné vers le bas dans le côté arrière du sens d'avancement du corps (10).

9. Machine pour transplanter des jeunes plants selon la revendication 1 dans laquelle l'appareil pour dénuder les bandes (15) consiste en une paire d'organes de guidage (34) pour introduire deux bandes (3A, 3B) séparées d'une série de jeunes plants en pots dans le sens de dénudement, un moyen rotatif d'extraction (35A, 35B) pour serrer les bandes tournant autour des organes de guidage (34) respectivement et des bobines d'enroulement (36A, 36B) et les bandes extraites par le moyen rotatif d'extraction (35A, 35B).

10. Machine pour transplanter des jeunes plants selon la revendication 9 dans laquelle le moyen rotatif d'extraction (35A, 35B) est placé sur les bandes extraites et tournées autour de l'organe de guidage (34) de réserve pour extraire en direction de la section de placement des jeunes plants (13).

11. Machine pour transplanter des jeunes plants selon la revendication 9 ou 10 dans laquelle le moyen rotatif d'extraction (35A, 35B) est formé avec une paire de galets rotatifs.

12. Machine pour transplanter des jeunes plants selon la revendication 9 ou 10 dans laquelle le moyen rotatif d'extraction (35A, 35B) est formé avec une paire de courroies rotatives.

13. Machine pour transplanter des jeunes plants selon la revendication 11 dans laquelle l'une des paires de galets rotatifs est remplacée par des bobines d'enroulement (103), les bobines d'enroulement (103) étant équipées d'un moyen de polarisation (108) pour polariser contre les galets (102).
